# EUROPEAN PATENT SPECIFICATION

(11) **EP 3 081 825 B1**
(45) Date of publication and mention of the grant of the patent: **01.04.2020**
(21) Application number: 16165752.3
(22) Date of filing: 18.04.2016
(51) Int. Cl.: F16D 55/36

(54) **INCREASED BRAKE RADIUS TO IMPROVE RTO PERFORMANCE**
ERHÖHTER BREMSRADIUS ZUR VERBESSERUNG DER RTO-LEISTUNG
RAYON DE FREINAGE ACCRU AFIN D'AMÉLIORER LES PERFORMANCES RTO

(30) Priority: 16.04.2015 US 201514688757
(43) Date of publication of application: 19.10.2016
(73) Proprietor: Goodrich Corporation, Charlotte, NC 28217-4578 (US)
(72) Inventor: SHEEHAN, Philip, Pueblo West, CO Colorado 81007 (US); KIRKPATRICK, Christopher T., Pueblo West, CO Colorado 81007 (US)
(74) Representative: Dehns

(56) References cited:
- FR-A1- 2 992 942
- GB-A- 1 324 991
- US-A- 5 205 382
- US-A- 5 402 865
- US-A1- 2005 115 778

## Description

### FIELD

The present invention relates to aircraft braking systems. In particular, the invention relates to positioning of actuators relative to a center of an annular pressure disk.

### BACKGROUND

Aircraft brake systems typically employ a series of friction disks forced into contact with each other to stop the aircraft. Friction disks splined to a non-rotating wheel axle are interspersed with friction disks splined to the rotating wheel. The friction disks withstand and dissipate the heat generated from contact between one another during braking. During high speed landings and rejected takeoffs ("RTOs"), the amount of heat generated can be significant. US 5402865 A describes an aircraft brake assembly retention mechanism.

### SUMMARY

A disk brake system, in accordance with various embodiments, includes a pressure plate having a center, an inner radius and an outer radius. The disk brake system also includes a first piston. The disk brake system also includes a first puck coupled to the first piston and configured to contact the pressure plate at a first distance from the center in response to the first piston being actuated. The first distance is different than an average of the inner radius and the outer radius. The first puck has a first dimension in a radial direction with reference to the pressure plate and a second dimension in a circumferential direction with reference to the pressure plate that is different than the first dimension; and characterized by the first dimension being greater than the second dimension.

A disk brake system, in accordance with various embodiments, includes a pressure plate having a center, an inner radius and an outer radius. The disk brake system also includes a first piston. The disk brake system also includes a first puck coupled to the first piston and configured to contact the pressure plate in response to the first piston being actuated. The first puck has a first dimension in a radial direction and a second dimension in a circumferential direction that is different than the first dimension. The first dimension is greater than the second dimension.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates a multi-disk brake, in accordance with various embodiments;
FIG. 2 illustrates pucks of actuators positioned relative to a pressure plate of the multi-disk brake of FIG. 1, in accordance with various embodiments;
FIG. 3 illustrates pucks of actuators positioned relative to a pressure plate of the multi-disk brake of FIG. 1, in accordance with various embodiments;
FIG. 4 illustrates pucks of actuators positioned relative to a pressure plate of the multi-disk brake of FIG. 1, in accordance with various embodiments;
FIG. 5A illustrates an elliptical-shaped puck, in accordance with various embodiments;
FIG. 5B illustrates pucks of actuators positioned relative to a pressure plate of the multi-disk brake of FIG. 1, in accordance with various embodiments;
FIG. 6 illustrates pucks of actuators positioned relative to a pressure plate of the multi-disk brake of FIG. 1, in accordance with various embodiments; and
FIG. 7 illustrates pucks of actuators positioned relative to a pressure plate of the multi-disk brake of FIG. 1, in accordance with various embodiments.

### DETAILED DESCRIPTION

The detailed description of exemplary embodiments herein makes reference to the accompanying drawings, which show exemplary embodiments by way of illustration.

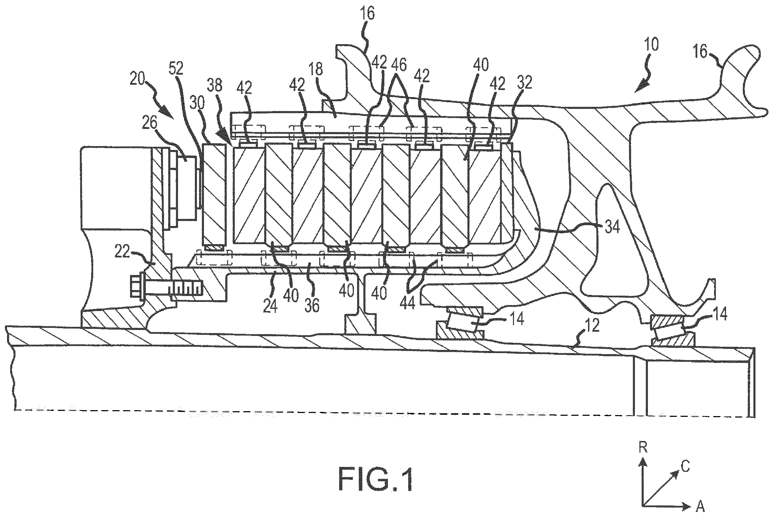

With reference to FIG. 1, a multi-disk brake system 20, in accordance with various embodiments, is illustrated according to various embodiments. In various embodiments, multi-disk brake system 20 may be used to reduce the speed of a wheel of an aircraft. An A-R-C axis has been included in the drawings to illustrate the axial (A), radial (R) and circumferential (C) directions. The system may include a wheel 10 supported for rotation around axle 12 by bearings 14. Wheel 10 includes rims 16 for supporting a tire (not shown), and a series of axially extending rotor splines 18 (one shown). Rotation of wheel 10 is modulated by disk brake system 20. Disk brake system 20 includes torque flange 22, torque tube 24, a plurality of pistons 26 (one shown), pressure plate 30, and end plate 32. Torque tube 24 is an elongated annular structure that includes a reaction plate 34 and a series of axially extending stator splines 36 (one shown). Reaction plate 34 and stator splines 36 may be integral with torque tube 24 as shown in FIG. 1, or attached as separate components.

Disk brake system 20 also includes a plurality of friction disks 38. The plurality of friction disks 38 includes at least one non-rotatable friction disk 40, also known as a stator, and at least one rotatable friction disk 42, also known as a rotor. Each friction disk 38 includes an attachment structure. In the embodiment of FIG. 1, each of four non-rotatable friction disks 40 include a plurality of stator lugs 44 at circumferentially spaced positions around non-rotatable friction disk 40 as an attachment structure. Similarly, each of five rotatable friction disks 42 include a plurality of rotor lugs 46 at circumferentially spaced positions around rotatable friction disk 42 as an attachment structure. In the embodiment of FIG. 1, pressure plate 30, end plate 32, and friction disks 38 are all annular structures made at least partially from a carbon composite material.

Torque flange 22 is mounted to axle 12. Torque tube 24 is bolted to torque flange 22 such that reaction plate 34 is near an axial center of wheel 10. End plate 32 is connected to a surface of reaction plate 34 facing axially away from the axial center of wheel 10. Thus, end plate 32 is non-rotatable by virtue of its connection to torque tube 24. Stator splines 36 support pressure plate 30 so that pressure plate 30 is also non-rotatable. Stator splines 36 also support non-rotatable friction disks 40. Non-rotatable friction disks 40 engage stator splines 36 with gaps formed between stator lugs 44. Similarly, rotatable friction disks 42 engage rotor splines 18 with gaps formed between rotor lugs 46. Thus, rotatable friction disks 42 are rotatable by virtue of their engagement with rotor splines 18 of wheel 10.

As shown in FIG. 1, rotatable friction disks 42 are arranged with end plate 32 on one end, pressure plate 30 on the other end, and non-rotatable friction disks 40 interleaved so that rotatable friction disks 42 are adjacent to non-rotatable friction components. Pistons 26 are connected to torque flange 22 at circumferentially spaced positions around torque flange 22. Pistons 26 face axially toward wheel 10 and include pucks 52 that contact a side of pressure plate 30 opposite rotatable friction disks 42. Pistons 26 may be powered electrically, hydraulically or pneumatically.

In some embodiments, pucks 52 may be coupled to reaction plate 34 and corresponding mating surfaces may be positioned on end plate 32 such that in response to actuation of pistons 26, a force is exerted on the rotatable friction disks 42 and the non-rotatable friction disks 40 towards reaction plate 34. In response to end plate 32 being within a predetermined distance of reaction plate 34, the pucks coupled to reaction plate 34 contact the corresponding mating surfaces such that during a rub event, end plate 32 and reaction plate 34 make contact via the pucks and the corresponding mating surfaces. Throughout the disclosure, shapes and positions of pucks 52 relative to pressure plate 30 are discussed. One skilled in the art will realize that the various shapes and positions of pucks 52 relative to pressure plate 30 can also be applied to the pucks and mating surfaces of reaction plate 34 and end plate 32. In various embodiments, the pucks of reaction plate 34 may be positioned at traditional locations relative to a center of reaction plate 34, in some embodiments, the pucks of reaction plate 34 may have the same shape and/or location relative to end plate 32 as pucks 52 have relative to pressure plate 30, and the pucks of reaction plate 34 may have different shapes and/or locations relative to end plate 32 as pucks 52 have relative to pressure plate 30.

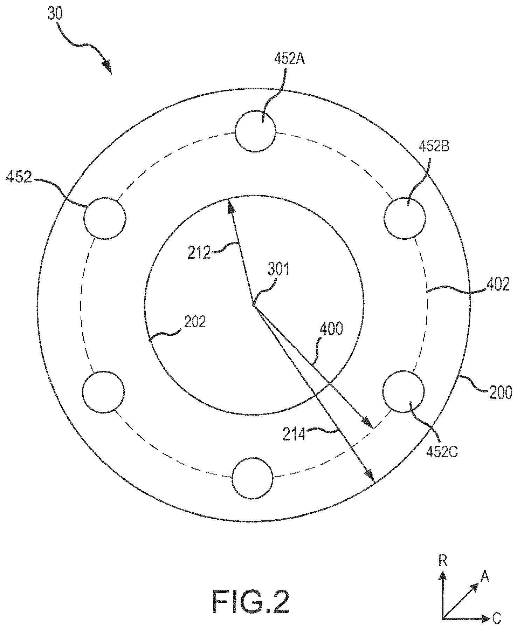

With reference now to FIG. 2, pressure plate 30, in accordance with various embodiments, may include an annular disk having an outer surface 200 and an inner surface 202. An inner radius 212 may correspond to a radius of inner surface 202 and an outer radius 214 may correspond to a radius of outer surface 200.

A plurality of pucks 452, in accordance with various embodiments, including puck 452A, 452B and 452C may be positioned relative to pressure plate 30 as illustrated. In response to the actuators of the disk brake system being actuated, the plurality of pucks 452 contact pressure plate 30 at the illustrated locations and apply an axial force on pressure plate 30.

Studies have validated the fact that the greatest transfer of heat in a disk brake is axially aligned with the center of a puck due to pressure distribution resulting from actuation of the pistons. Stated differently, the heat is not evenly distributed across the radial dimension of the disk. The studies have also shown that properties of a carbon disk can change in the areas of greater heat due to a phenomena called a "hot band" that corresponds to rejected takeoff (RTO) fade.

Traditional disk brakes are designed such that the actuators contact the pressure plate at a radius determined using a predetermined formula. The radius at which the actuators are positioned may further vary slightly based on volumetric constraints of the system but is traditionally within five percent (5%) of the arithmetic average radius of the pressure plate. Traditional disk brakes are subject to heat buildup and RTO fade due to the speed at which heat is dissipated in traditional disk brakes. Plurality of pucks 452, however, are positioned such that they may or may not contact pressure plate 430 at an arithmetic average radius and are instead designed to be positioned at locations which will decrease the heat buildup and formation of "hot bands."

A line 402 illustrates the average distance from each of the plurality of pucks 452 to center 301 (i.e., "puck average"). When referenced herein, a distance from a puck to center 301 corresponds to a distance from a center of the puck to center 301 and average distance refers to an arithmetic mean of inner radius 212 and outer radius 214. Each of the plurality of pucks 452 may be positioned at a distance 400 from a center 301 of pressure plate 30. In various embodiments and as illustrated in FIG. 2, distance 400 may be greater than the average of inner radius 212 and outer radius 214. Where referenced herein, when a first distance (i.e., the puck average) is greater than a second distance (i.e., the arithmetic mean of inner radius 212 and outer radius 214), the first distance is at least five percent (5%) greater than the second distance.

With brief reference to FIG. 1, pressure plate 30, non-rotatable friction disks 40 and rotatable friction disks 42 may be subject to an increase in temperature at locations axially adjacent pucks 52. With renewed reference to FIG. 2, when distance 400 is larger than an average of inner radius 212 and outer radius 214, the heat will be formed in a larger area, allowing for faster distribution and less localized heat. Accordingly, the heat energy is better distributed among pressure plate 30, non-rotatable friction disks 40 and rotatable friction disks 42 as the result of distance 400 being greater than the average of inner radius 212 and outer radius 214.

With brief reference to FIGS. 1 and 2, performance of disk brake system 20 may be measured using torque. The torque of disk brake system 20 may be based on a combination of axial force applied by pistons 26 and by the distance between pistons 26 and center 301. With renewed reference to FIG. 2, because distance 400 is greater than an average of inner radius 212 and outer radius 214, the torque of the disk brake system will be increased such that the disk brake system is more efficient than if pucks 452 were centered between outer surface 200 and inner surface 202.

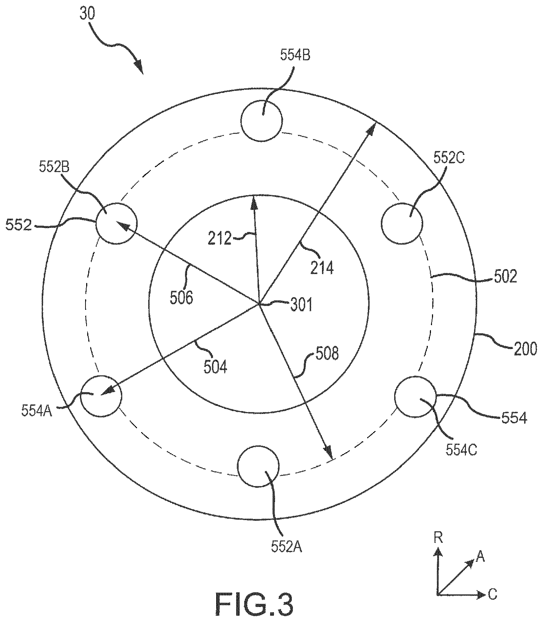

With reference now to FIG. 3, a plurality of pucks 554, in accordance with various embodiments, including puck 554A, 554B and 554C, and a plurality of pucks 552 including puck 552A, 552B and 552C, may be positioned relative to pressure plate 30 as shown. Pucks 554 are positioned at different distances from center 301 than pucks 552. Pucks 554 are positioned a distance 504 from center 301 and pucks 552 are positioned a distance 506 from center 301. In various embodiments, distance 504 may be greater than the average of inner radius 212 and outer radius 214 while distance 506 may be equal to, greater than or less than the average of inner radius 212 and outer radius 214. In various embodiments, pucks 554 and pucks 552 may be any combination of greater than, equal to or less than the average of inner radius 212 and outer radius 214.

In FIG. 3, plurality of pucks 554 and plurality of pucks 552 each include 3 pucks. In various embodiments, any number of pucks 554 and any number of pucks 552 may be present such that the ratio of pucks 554 to pucks 552 may be any ratio.

The staggering of pucks 554 and pucks 552 about pressure plate 30 distributes the friction areas of pressure plate 30 over a larger area of pressure plate 30. This distribution of friction areas may provide for faster dissipation of heat energy and less localized heat.

Pucks 554 and pucks 552 may have an average distance 508 (i.e., "puck average," illustrated by a line 502) from center 301 that is greater than the average of inner radius 212 and outer radius 214. This provides more area for friction heat to dissipate. Additionally, as discussed above, the torque of a disk brake system may be related to the radius of the pucks from center 301. Accordingly, the torque of the disk brake system may be increased in response to average distance 508 being greater than the average of inner radius 212 and outer radius 214.

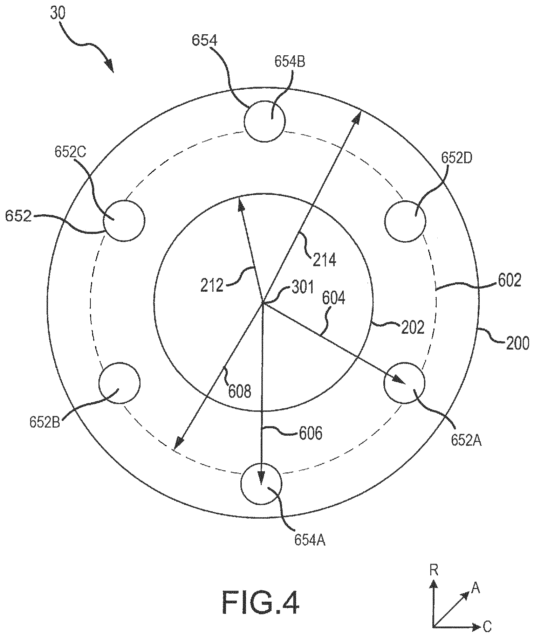

With reference now to FIG. 4, a plurality of pucks 652, in accordance with various embodiments, including puck 652A, 652B, 652C and 652D, and pucks 654 including puck 654A and 654B, may be staggered differently than the pucks of FIG. 3. Pucks 652 may be positioned a distance 604 from center 301 and pucks 654 may be positioned a distance 606 from center 301. A line 602 corresponds to the average distance of all pucks 654 and pucks 652 (i.e., "puck average"). Line 602 may be positioned an average distance 608 from center 301, which may be greater than the average of inner radius 212 and outer radius 214. The staggering of pucks and the average distance 608 illustrated in FIG. 4 provides for increased friction area such that heat may be more evenly distributed among pressure plate 30 and generated heat will be less localized. In response to distance 606 being greater than the average of inner radius 212 and outer radius 214, the torque of the disk brake system will be greater than if the average distance were less than or equal to the average of inner radius 212 and outer radius 214.

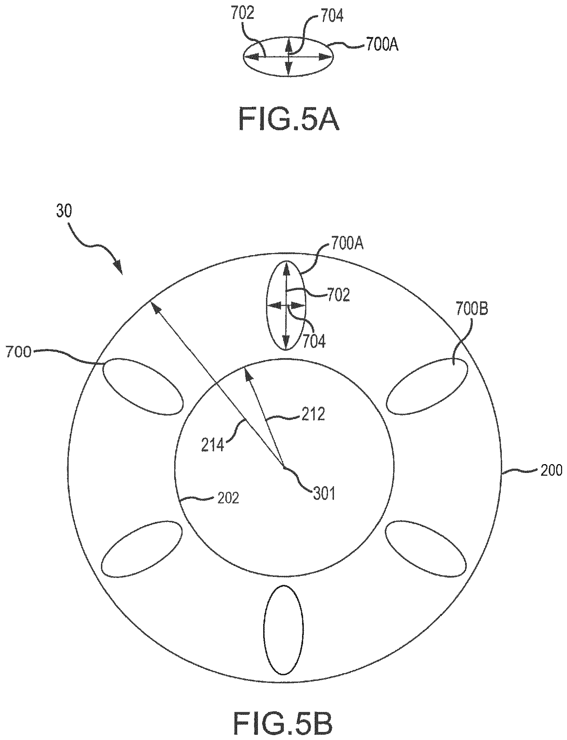

With reference now to FIG. 5A, as opposed to circular traditional pucks, a puck 700A, in accordance with various embodiments, may have an elliptical shape. In that regard, puck 700A may have a distance 702 that is larger than a distance 704. In various embodiments, a puck may have a triangular, rectangular, circular, elliptical, oblong, etc. shape. In various embodiments, any of the pucks of FIGS. 2-4 may be replaced with puck 700A.

With reference now to FIG. 5B, a plurality of pucks 700, in accordance with various embodiments, including puck 700A and 700B may each have similar dimensions as puck 700A in FIG. 5A. Because each of the pucks 701 has a longer radial distance 702 than traditional pucks, more area of pressure plate 30 is exposed to friction-generated heat. Accordingly, the dissipation of heat may be increased as the heat will be generated over a larger surface area, allowing for quicker dissipation. Additionally, because the radius from at least a portion of each of the pucks 700 to center 301 may be greater than an average of inner radius 212 and outer radius 214, the torque of the disk brake system may be increased over a traditional disk brake system.

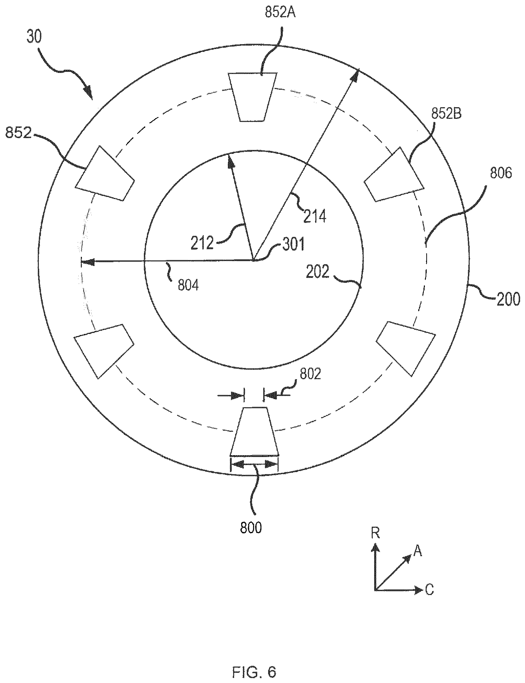

With reference now to FIG. 6, a plurality of pucks 852, in accordance with various embodiments, including puck 852A and puck 852B may be positioned at any distance from center 301. Pucks 852 may each have an inner distance 802 that is less than an outer distance 800. Outer distance 800 is greater than inner distance 802 because inner distance 802 corresponds to a smaller swept area than outer distance 800 based on the respective distances from center 301. A line 806 corresponds to the center of pressure of pucks 852 (i.e., "puck average"). Line 806 may be positioned a distance 804 from center 301, which may be greater than the average of inner radius 212 and outer radius 214. Because outer distance 800 is greater than inner distance 802, increased friction area is provided such that heat may be more evenly distributed among pressure plate 30 and generated heat will be less localized. In response to distance 804 being greater than the average of inner radius 212 and outer radius 214, the torque of the disk brake system will be greater than if the average distance were less than or equal to the average of inner radius 212 and outer radius 214.

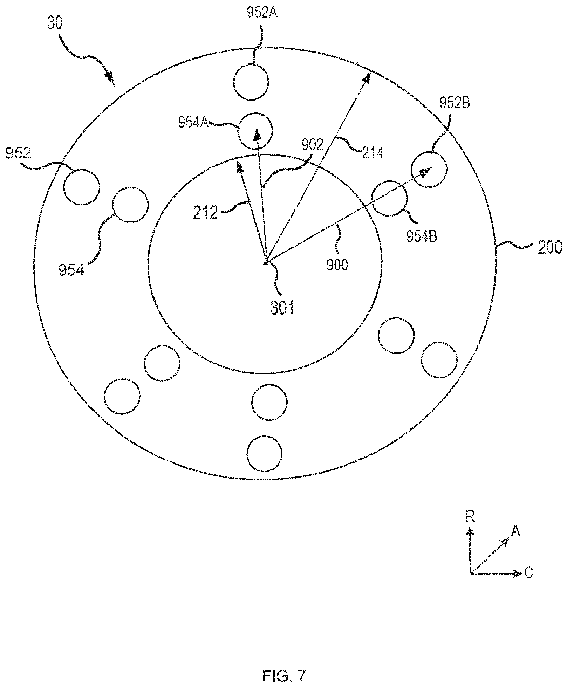

With reference now to FIG. 7, a plurality of pucks 952, in accordance with various embodiments, including puck 952A and 952B and a plurality of pucks 954 including puck 954A and 954B may be provided. Pucks 952 may be positioned a distance 900 from center 301 and pucks 954 may be positioned a distance 902 from center 301. Pucks 952 may be positioned nearer outer surface 200 than inner surface 202 and pucks 954 may be positioned nearer inner surface 202 than outer surface 200. Stated differently, distance 900 may be greater than the average of inner radius 212 and outer radius 214 and distance 902 may be lesser than the average of inner radius 212 and outer radius 214. Because pucks 952 and 954 are positioned near outer surface 200 and inner surface 202, respectively, more area of pressure plate 30 is exposed to friction-generated heat. Accordingly, the dissipation of heat may be increased as the heat will be generated over a larger surface area, allowing for quicker dissipation. Additionally, because the radius from at least a portion of each of the pucks 952 and/or the pucks 954 to center 301 may be greater than an average of inner radius 212 and outer radius 214, the torque of the disk brake system may be increased over a traditional disk brake system.

Benefits, other advantages, and solutions to problems have been described herein with regard to specific embodiments. Furthermore, the connecting lines shown in the various figures contained herein are intended to represent exemplary functional relationships and/or physical couplings between the various elements. The scope of the invention is accordingly to be limited by nothing other than the appended claims.

After reading the description, it will be apparent to one skilled in the relevant art(s) how to implement the invention.

## Claims

1. A disk brake system (20) comprising:a pressure plate (30) having a center, an inner radius and an outer radius;a first piston (26); and a first puck (554, 654) coupled to the first piston and configured to contact the pressure plate (30) in response to the first piston being actuated, the first puck (554, 654) having a first dimension in a radial direction with reference to the pressure plate (30) and a second dimension in a circumferential direction with reference to the pressure plate (30) that is different than the first dimension, and **characterized by** the first dimension being greater than the second dimension.

2. The disk brake system (20) of claim 1, wherein said first puck (554, 654) is configured to contact the pressure plate (30) at a first distance from the center, wherein said first distance is different than an average of the inner radius (212) and the outer radius (214) of said pressure plate (30).

3. The disk brake system of claim 2, further comprising:
a second piston (26); and
a second puck (552, 652) coupled to the second piston (26) and configured to contact the pressure plate (30) at a second distance from the center in response to the second piston (26) being actuated, the second distance being different than the first distance.

4. The disk brake system of claim 3, wherein a puck average of the first distance and the second distance is greater than the average of the inner radius (212) and the outer radius (214).

5. The disk brake system of claim 3, further comprising:
a plurality of third pistons (26) each having a third puck configured to contact the pressure plate at a third distance from the center that is equal to the first distance; and
a plurality of fourth pistons (26) each having a fourth puck configured to contact the pressure plate at a fourth distance from the center that is equal to the second distance.

6. The disk brake system of claim 5, wherein a quantity of the plurality of third pistons (26) is equal to a quantity of the plurality of fourth pistons (26).

7. The disk brake system of claim 5, wherein a quantity of the plurality of third pistons (26) is not equal to a quantity of the plurality of fourth pistons (26).

8. The disk brake system of any of claims 2 to 7, wherein the pressure plate (30) is an annular disk.

9. The disk brake system of any of claims 2 to 8, wherein the first distance is larger than the average of the inner radius and the outer radius.

10. The disk brake system of claim 1, further comprising:
a second piston (26); and
a second puck (552, 652) coupled to the second piston (26) and configured to contact the pressure plate at a second distance from the center in response to the second piston (26) being actuated,
wherein the first puck (554, 654) is configured to contact the pressure plate (30) at a first distance from the center in response to the first piston (26) being actuated, the first distance being different than the second distance.

11. The disk brake system of claim 10, wherein an average of the first distance and the second distance is greater than the average of the inner radius (212) and the outer radius (216).

12. The disk brake system of claim 10, further comprising:
a plurality of third pistons (26) each having a third puck configured to contact the pressure plate at a third distance from the center that is the same as the first distance; and
a plurality of fourth pistons (26) each having a fourth puck configured to contact the pressure plate at a fourth distance from the center that is the same as the second distance.

13. The disk brake system of any of claims 1 or 10 to 12, wherein the first puck (554, 654) includes a non-circular shape.

## Patentansprüche

1. Scheibenbremssystem (20), umfassend: eine Druckplatte (30), die eine Mitte, einen Innenradius und einen Außenradius aufweist; einen ersten Kolben (26); und ein erstes Scheibenelement (554, 654), das an den ersten Kolben gekoppelt und konfiguriert ist, um die Druckplatte (30) als Reaktion darauf, dass der erste Kolben betätigt wird, zu kontaktieren, wobei das erste Scheibenelement (554, 654) eine erste Abmessung in einer radialen Richtung in Bezug auf die Druckplatte (30) und eine zweite Abmessung, die sich von der ersten Abmessung unterscheidet, in einer umlaufenden Richtung in Bezug auf die Druckplatte (30) aufweist, und **dadurch gekennzeichnet, dass** die erste Abmessung größer als die zweite Abmessung ist.

2. Scheibenbremssystem (20) nach Anspruch 1, wobei das erste Scheibenelement (554, 654) konfiguriert ist, um die Druckplatte (30) in einem ersten Abstand zu der Mitte zu kontaktieren, wobei sich der erste Abstand von einem Durchschnitt des Innenradius (212) und des Außenradius (214) der Druckplatte (30) unterscheidet.

3. Scheibenbremssystem nach Anspruch 2, ferner umfassend:
einen zweiten Kolben (26); und
ein zweites Scheibenelement (552, 652), das an den zweiten Kolben (26) gekoppelt und konfiguriert ist, um die Druckplatte (30) als Reaktion darauf, dass der zweite Kolben (26) betätigt wird, in einem zweiten Abstand zu der Mitte zu kontaktieren, wobei sich der zweite Abstand von dem ersten Abstand unterscheidet.

4. Scheibenbremssystem nach Anspruch 3, wobei ein Scheibenelementdurchschnitt des ersten Abstands und des zweiten Abstands größer als der Durchschnitt des Innenradius (212) und des Außenradius (214) ist.

5. Scheibenbremssystem nach Anspruch 3, ferner umfassend:
eine Vielzahl von dritten Kolben (26), die jeweils ein drittes Scheibenelement aufweisen, das konfiguriert ist, um die Druckplatte in einem dritten Abstand zu der Mitte zu kontaktieren, der gleich dem ersten Abstand ist; und
eine Vielzahl von vierten Kolben (26), die jeweils ein viertes Scheibenelement aufweisen, das konfiguriert ist, um die Druckplatte in einem vierten Abstand zu der Mitte zu kontaktieren, der gleich dem zweiten Abstand ist.

6. Scheibenbremssystem nach Anspruch 5, wobei eine Menge der Vielzahl von dritten Kolben (26) gleich einer Menge der Vielzahl von vierten Kolben (26) ist.

7. Scheibenbremssystem nach Anspruch 5, wobei eine Menge der Vielzahl von dritten Kolben (26) nicht gleich einer Menge der Vielzahl von vierten Kolben (26) ist.

8. Scheibenbremssystem nach einem der Ansprüche 2 bis 7, wobei die Druckplatte (30) eine ringförmige Scheibe ist.

9. Scheibenbremssystem nach einem der Ansprüche 2 bis 8, wobei der erste Abstand größer als der Durchschnitt des Innenradius und des Außenradius ist.

10. Scheibenbremssystem nach Anspruch 1, ferner umfassend:
einen zweiten Kolben (26); und
ein zweites Scheibenelement (552, 652), das an den zweiten Kolben (26) gekoppelt und konfiguriert ist, um die Druckplatte als Reaktion darauf, dass der zweite Kolben (26) betätigt wird, in einem zweiten Abstand zu der Mitte zu kontaktieren,
wobei das erste Scheibenelement (554, 654) konfiguriert ist, um die Druckplatte (30) als Reaktion darauf, dass der erste Kolben (26) betätigt wird, in einem ersten Abstand zu der Mitte zu kontaktieren, wobei sich der erste Abstand von dem zweiten Abstand unterscheidet.

11. Scheibenbremssystem nach Anspruch 10, wobei ein Durchschnitt des ersten Abstands und des zweiten Abstands größer als der Durchschnitt des Innenradius (212) und des Außenradius (216) ist.

12. Scheibenbremssystem nach Anspruch 10, ferner umfassend:
eine Vielzahl von dritten Kolben (26), die jeweils ein drittes Scheibenelement aufweisen, das konfiguriert ist, um die Druckplatte in einem dritten Abstand zu der Mitte zu kontaktieren, der gleich dem ersten Abstand ist; und
eine Vielzahl von vierten Kolben (26), die jeweils ein viertes Scheibenelement aufweisen, das konfiguriert ist, um die Druckplatte in einem vierten Abstand zu der Mitte zu kontaktieren, der gleich dem zweiten Abstand ist.

13. Scheibenbremssystem nach einem der Ansprüche 1 oder 10 bis 12, wobei das erste Scheibenelement (554, 654) eine nicht kreisförmige Form beinhaltet.

## Revendications

1. Système de freinage à disque (20) comprenant : une plaque de pression (30) ayant un centre, un rayon intérieur et un rayon extérieur ; un premier piston (26) ; et un premier palet (554, 654) couplé au premier piston et conçu pour entrer en contact avec la plaque de pression (30) en réponse à l'actionnement du premier piston, le premier palet (554, 654) ayant une première dimension dans une direction radiale avec référence à la plaque de pression (30) et une seconde dimension dans une direction circonférentielle en référence à la plaque de pression (30) qui est différente de la première dimension, et **caractérisée en ce que** la première dimension est supérieure à la seconde dimension.

2. Système de freinage à disque (20) selon la revendication 1, dans lequel ledit premier palet (554, 654) est conçu pour entrer en contact avec la plaque de pression (30) à une première distance du centre, dans lequel ladite première distance est différente d'une moyenne du rayon intérieur (212) et du rayon extérieur (214) de ladite plaque de pression (30).

3. Système de freinage à disque selon la revendication 2, comprenant en outre :
un deuxième piston (26) ; et
un deuxième palet (552, 652) couplé au deuxième piston (26) et conçu pour entrer en contact avec la plaque de pression (30) à une deuxième distance du centre en réponse à l'actionnement du deuxième piston (26), la deuxième distance étant différente de la première distance.

4. Système de freinage à disque selon la revendication 3, dans lequel une moyenne de palet de la première distance et de la deuxième distance est supérieure à la moyenne du rayon intérieur (212) et du rayon extérieur (214).

5. Système de freinage à disque selon la revendication 3, comprenant en outre :
une pluralité de troisièmes pistons (26) ayant chacun un troisième palet conçu pour entrer en contact avec la plaque de pression à une troisième distance du centre qui est égale à la première distance ; et
une pluralité de quatrièmes pistons (26) ayant chacun un quatrième palet conçu pour entrer en contact avec la plaque de pression à une quatrième distance du centre qui est égale à la deuxième distance.

6. Système de freinage à disque selon la revendication 5, dans lequel une quantité de la pluralité de troisièmes pistons (26) est égale à une quantité de la pluralité de quatrièmes pistons (26).

7. Système de freinage à disque selon la revendication 5, dans lequel une quantité de la pluralité de troisièmes pistons (26) n'est pas égale à une quantité de la pluralité de quatrièmes pistons (26).

8. Système de freinage à disque selon l'une quelconque des revendications 2 à 7, dans lequel la plaque de pression (30) est un disque annulaire.

9. Système de freinage à disque selon l'une quelconque des revendications 2 à 8, dans lequel la première distance est supérieure à la moyenne du rayon intérieur et du rayon extérieur.

10. Système de freinage à disque selon la revendication 1, comprenant en outre :
un deuxième piston (26) ; et
un deuxième palet (552, 652) couplé au deuxième piston (26) et conçu pour entrer en contact avec la plaque de pression à une deuxième distance du centre en réponse à l'actionnement du deuxième piston (26),
dans lequel le premier palet (554, 654) est conçu pour entrer en contact avec la plaque de pression (30) à une première distance du centre en réponse à l'actionnement du premier piston (26), la première distance étant différente de la deuxième distance.

11. Système de freinage à disque selon la revendication 10, dans lequel une moyenne de la première distance et de la deuxième distance est supérieure à la moyenne du rayon intérieur (212) et du rayon extérieur (216).

12. Système de freinage à disque selon la revendication 10, comprenant en outre :
une pluralité de troisièmes pistons (26) ayant chacun un troisième palet conçu pour entrer en contact avec la plaque de pression à une troisième distance du centre qui est égale à la première distance ; et
une pluralité de quatrièmes pistons (26) ayant chacun un quatrième palet conçu pour entrer en contact avec la plaque de pression à une quatrième distance du centre qui est égale à la deuxième distance.

13. Système de freinage à disque selon l'une quelconque des revendications 1 ou 10 à 12, dans lequel le premier palet (554, 654) comprend une forme non circulaire.
